# FASCICULE DE BREVET EUROPEEN

(11) **EP 2 804 778 B1**
(45) Date de publication et mention de la délivrance du brevet: **14.11.2018**
(21) Numéro de dépôt: 13704151.3
(22) Date de dépôt: 11.01.2013
(51) Int. Cl.: B60L 11/18

(54) **SYSTÈME DE COMMUNICATION PAR COURANTS PORTEURS HAUTES FRÉQUENCES PLC SUR UNE LIGNE PILOTE**
SYSTEM ZUR KOMMUNIKATION MITTELS HOCHFREQUENTER PLC-TRÄGERSTRÖME ÜBER EINE TREIBERLEITUNG
SYSTEM FOR COMMUNICATING BY MEANS OF HIGH-FREQUENCY PLC CARRIER CURRENTS OVER A DRIVING LINE

(30) Priorité: 16.01.2012 FR 1250384
(43) Date de publication de la demande: 26.11.2014
(73) Titulaire: PSA Automobiles SA, 78300 Poissy (FR)
(72) Inventeur: LAMBERT, Quentin, F-75015 Paris (FR); MORAND, Nicolas, F-92400 Courbevoie (FR)
(86) Numéro de dépôt international: PCT/FR2013/050070
(87) Numéro de publication internationale: WO 2013/107968

(56) Documents cités:
- EP-A1- 0 581 351
- EP-A2- 0 124 260
- WO-A1-92/21177
- DE-A1-102010 011 162
- JP-A- 2003 264 486
- US-A1- 2006 214 507
- US-A1- 2009 237 225
- US-A1- 2010 111 201
- US-A1- 2012 002 714
- Lewandowski: "Performance Evaluation of PLC over the IEC 61851 Control Pilot Signal", Proceedings of WSPLC, the Workshop on Power Line Communications 2011, 13 décembre 2011 (2011-12-13), XP055047885, Extrait de l'Internet: URL:http://www.isplc.org/docsearch/Proceed ings/2011/pdf/Lewandowski.pdf [extrait le 2012-12-14]
- EV CHARGING SYSTEMS COMMITEE: "(R) SAE Electric Vehicle Conductive Charge Coupler J1772", 19961001 , vol. J1772, no. REV. NOV2001 1 octobre 1996 (1996-10-01), pages 1-32, XP002666503, Extrait de l'Internet: URL:http://bzwxw.com/soft/UploadSoft/new5/ SAE--J1772-2001.pdf [extrait le 2012-01-02]

## Description

La présente invention concerne un système de communication par courants porteurs sur une ligne pilote pour échanger des informations entre deux ensembles indépendants, ainsi qu'une borne de rechargement de batteries et un véhicule électrique ou hybride, prévus pour un tel système de communication.

Les véhicules électriques ainsi que certain types de véhicules hybrides, comportent un ou plusieurs batteries d'alimentation d'une machine électrique de traction, appelées par la suite batteries, qui peuvent être rechargées sur des bornes publiques ou privées de rechargement, reliées à un réseau de distribution d'électricité.

Un type de borne de rechargement connu, présenté notamment par le document DE-A1-102010011162, comporte en parallèle avec le câble de distribution de la puissance électrique, une ligne pilote qui transmet des signaux électriques entre la borne de rechargement et le véhicule, afin d'échanger des informations.

La ligne pilote transmet en particulier un signal « PWM » (Power Width Modulation), comprenant une succession de créneaux de tension carrés dont la largeur est variable, à une fréquence qui est de l'ordre de 1kHz. La borne de rechargement délivre le courant seulement si la communication est bien établie, pour assurer la sécurité, et le véhicule mesure en permanence pendant la charge des batteries, la largeur des créneaux du signal PWM pour en déduire la valeur de l'intensité de courant que la borne peut fournir, suivant la norme ISO/IEC 61851-1.

Il est connu aussi d'utiliser la ligne pilote pour transmettre d'autres informations entre la borne de rechargement et le véhicule, relatives par exemple à la gestion de la puissance électrique disponible, ou au paiement de cette recharge, par un procédé de multiplexage qui ajoute sur cette ligne pilote des courants porteurs de plus hautes fréquences « PLC » (Power Line Communication), comprenant en particulier une ou plusieurs fréquences comprises entre 1 et 30 MHz.

Un tel système est par exemple présenté dans le document US 2012/002714.

Chaque extrémités de la ligne pilote est reliée à une partie émettrice générant les courants porteurs hautes fréquences PLC en fonction des informations à émettre, et à une partie réceptrice qui reçoit et exploite ces courants. On peut ainsi avec des filtres passe haut situés aux extrémités de la ligne pilote, séparer les hautes fréquences des courants porteurs PLC, de la basse fréquence du signal PWM, pour isoler ces parties émettrice et réceptrice de cette basse fréquence.

Pour ce procédé de multiplexage, l'impédance caractéristique de la ligne pilote est un paramètre important à prendre en compte pour injecter dans cette ligne les courants porteurs hautes fréquences PLC, sans risque de perturbations importantes du signal PWM afin de respecter la norme pour ce signal.

De plus pour les courants porteurs hautes fréquences PLC, l'impédance de la ligne a d'autant plus d'influence sur ces courants que cette ligne est longue, et on peut obtenir des effets de propagation et de réflexion de ces courants. Il est alors connu pour ces hautes fréquences, d'utiliser des impédances résistives de terminaison aux extrémités de la ligne pilote, calculées en rapport avec l'impédance caractéristique de la ligne, afin de transmettre un maximum de puissance tout en réalisant une atténuation la plus constante possible suivant les différentes fréquences des courants porteurs.

A l'inverse, le signal PWM comporte des fréquences assez basses pour être très peu sensible aux effets de propagation sur la ligne pilote, les valeurs du signal sont pratiquement les mêmes aux deux extrémités de la ligne à chaque instant donné.

Un problème qui se pose alors, est que les impédances de terminaison résistives nécessaires pour obtenir une atténuation constante des courants porteurs hautes fréquences PLC, sont vues aussi par le signal PWM, et risquent de modifier suffisamment ce signal pour qu'il ne respecte plus la norme ISO/IEC 61851-1.

La présente invention a notamment pour but d'éviter ces inconvénients de la technique antérieure.

Elle propose à cet effet un système de communication par courants porteurs hautes fréquences PLC sur une ligne pilote, pour échanger des informations entre deux ensembles indépendants, comportant à chaque extrémité un sous-ensemble émetteur des courants porteurs hautes fréquences PLC, et une impédance de terminaison, cette ligne pilote transmettant de plus à un de ces ensembles qui est récepteur, un signal carré PWM basse fréquence qui donne une information notamment par la largeur de ses créneaux de tension, caractérisé en ce que chaque impédance de terminaison est constituée d'un circuit relié à la terre, comportant un condensateur et une résistance disposés en série, ou de tout circuit électronique d'impédance équivalente proche.

Un avantage de ce système de communication, est que grâce aux composants passifs des impédances, comprenant un condensateur disposé en série avec une résistance reliée à la terre, on réalise une impédance efficiente, simple et économique, qui peut donner une atténuation des courants porteurs très constante en fonction de l'impédance, sans modifier notablement le signal carré PWM.

Le système de communication selon l'invention peut en outre comporter une ou plusieurs des caractéristiques suivantes, qui peuvent être combinées entre elles.

Avantageusement, la résistance de l'impédance de terminaison, a une valeur proche de l'impédance caractéristique de la ligne pilote.

Avantageusement, le condensateur comporte une valeur de capacité calculée pour déformer de manière limitée les caractéristiques électriques du signal carré PWM, notamment les temps de montée et de descente du signal carré, de manière à maintenir ce signal dans la norme ISO/IEC 61851-1.

Avantageusement, le signal carré PWM est transmis dans l'ensemble récepteur à un amplificateur, par exemple du type push-pull comportant une impédance d'entrée suffisamment élevée, et une impédance de sortie permettant de transmettre ce signal à un bloc d'analyse du signal PWM.

Avantageusement, le bloc d'analyse du signal carré PWM comporte en entrée un filtre passe-bas, pour filtrer les courants porteurs hautes fréquences PLC.

Avantageusement, chaque ensemble comporte à l'extrémité de la ligne pilote, un bloc émetteur de courants porteurs hautes fréquences PLC qui est relié à cette ligne par un condensateur.

Les courants porteurs hautes fréquences PLC peuvent comporter une ou plusieurs fréquences comprises sensiblement entre 1 et 30 MHz.

En particulier, le système de communication par courants porteurs hautes fréquences PLC, peut être prévu pour transmettre des informations entre une borne de recharge de batteries d'un véhicule automobile électrique ou hybride, et ce véhicule.

L'invention a aussi pour objet une borne de recharge de batteries d'un véhicule électrique ou hybride, mettant en oeuvre un système de communication par courants porteurs hautes fréquences PLC sur une ligne pilote pour échanger des informations entre cette borne et le véhicule, comportant à chaque extrémité un sous-ensemble émetteur des courants porteurs hautes fréquences PLC, et une impédance de terminaison, cette ligne pilote transmettant de plus au véhicule, un signal carré PWM basse fréquence qui donne une information notamment par la largeur de ses créneaux de tension, l'impédance de terminaison de la borne étant constituée d'un circuit relié à la terre, comportant un condensateur et une résistance disposés en série, ou de tout circuit électronique d'impédance équivalente proche.

L'invention a de plus pour objet un véhicule électrique ou hybride comportant des batteries rechargeable par une borne de recharge, mettant en oeuvre un système de communication par courants porteurs hautes fréquences PLC sur une ligne pilote pour échanger des informations entre cette borne et ce véhicule, comportant à chaque extrémité un sous-ensemble émetteur des courants porteurs hautes fréquences PLC, et une impédance de terminaison, cette ligne pilote transmettant de plus au véhicule, un signal carré PWM basse fréquence qui donne une information notamment par la largeur de ses créneaux de tension, l'impédance de terminaison de la borne étant constituée d'un circuit relié à la terre, comportant un condensateur et une résistance disposés en série, ou de tout circuit électronique d'impédance équivalente proche.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est un schéma fonctionnel d'un système de communication selon l'invention, présentant deux ensembles se trouvant chacun dans la borne de recharge ou dans le véhicule, reliés par une ligne pilote ; et
- la figure 2 présente une simulation de l'atténuation de cette ligne pilote, pour une gamme de fréquences du courant porteur.

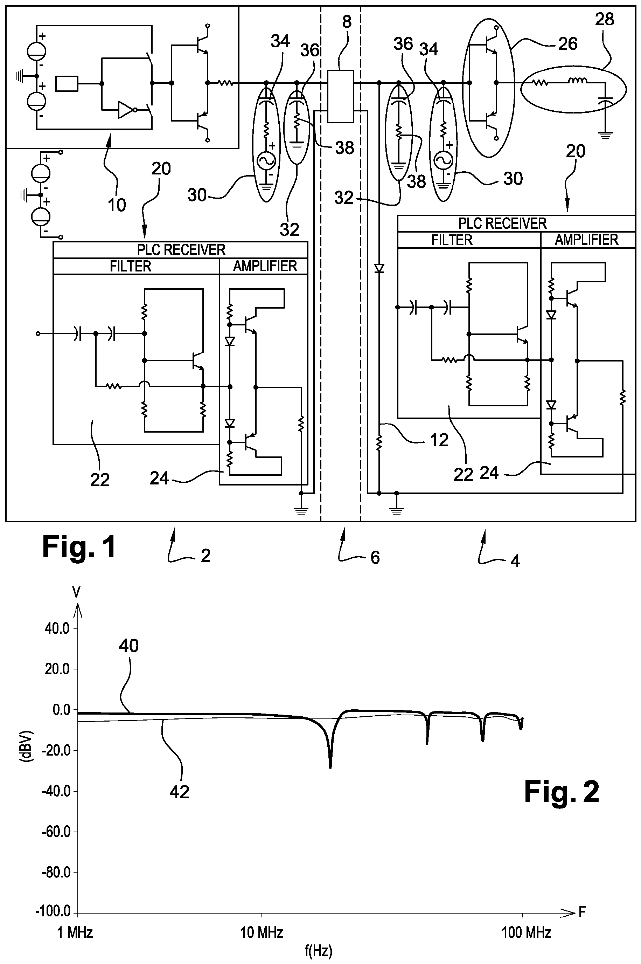

La figure 1 présente un système de communication comportant à gauche de la figure un premier ensemble 2 installé dans la borne de recharge, à droite de la figure un deuxième ensemble 4 installé dans le véhicule 4, et au centre une liaison 6 reliant ces deux ensembles, comprenant une ligne pilote 8 comportant deux conducteurs électriques.

La ligne pilote 8 est disposée en parallèle d'un câble de distribution de la puissance électrique non représenté, pour recharger les batteries du véhicule.

Le premier ensemble 2 comporte un premier bloc 10 comprenant un générateur de signal carré PWM suivant une basse fréquence fondamentale qui est de l'ordre de 1kHz, et un amplificateur de ce signal.

Le signal carré PWM est transmis par la ligne pilote 8 à un circuit de confirmation 12 du deuxième ensemble 4, comprenant une diode, puis une résistance reliée à la terre. Ce circuit de confirmation 12 permet quand il est fermé de confirmer à la borne que la connexion est établie, de manière à autoriser une mise à disposition de la puissance pour la recharge tout en assurant la sécurité.

En variante, la confirmation peut être donnée par d'autres types de circuit de confirmation, comportant des caractéristiques électriques équivalentes.

Le signal carré PWM est aussi transmis dans le deuxième ensemble 4 du véhicule, à un amplificateur 26 qui est dans cet exemple du type push-pull, comportant une impédance d'entrée suffisamment élevée, et une impédance de sortie permettant de transmettre ce signal à un bloc d'analyse du signal PWM 28. L'amplificateur 26 permet de faire une adaptation d'impédance entre la ligne pilote 8, et le bloc d'analyse du signal PWM 28.

Le bloc d'analyse du signal PWM 28 comporte en entrée un filtre passe-bas, notamment d'ordre 2, comprenant une fréquence de coupure qui peut être par exemple de 160kHz, pour filtrer les courants porteurs hautes fréquences PLC, puis un système d'analyse de ce signal qui permet de connaitre à partir des largueurs des signaux carrés, les niveaux de puissance disponibles pour la recharge des batteries du véhicule.

Ce système d'émission de signaux carrés PWM est conforme à la norme ISO/IEC 61851-1.

Chaque ensemble de la borne de recharge 2 ou du véhicule 4, comporte un bloc récepteur 20 de courants porteurs hautes fréquences PLC, comprenant deux sous-ensembles 22, 24.

Le premier sous-ensemble 22 est un filtre passe haut, notamment actif d'ordre 2, comprenant une fréquence de coupure qui peut être par exemple de 700kHz, avec une impédance d'entrée suffisamment élevée, permettant de séparer le signal carré PWM pour ne laisser entrer que les courants porteurs hautes fréquences PLC.

Le deuxième sous-ensemble 24 est un amplificateur, qui est dans cet exemple du type push-pull, délivrant la puissance nécessaire à l'entrée des puces électroniques recevant les courants porteurs hautes fréquences PLC.

Chaque ensemble de la borne de recharge 2 ou du véhicule 4, comporte à l'extrémité de la ligne pilote 8 un bloc émetteur 30 de courants porteurs hautes fréquences PLC, générant ces courants en fonction des informations à transmettre, qui est relié à la ligne par un condensateur 34 permettant d'injecter ces courants dans cette ligne avec une faible impédance de sortie.

Chaque extrémité de la ligne pilote 8, comporte de plus un bloc impédance de terminaison 32, constitué d'un circuit comprenant uniquement des composants passifs, qui est disposé en parallèle du bloc émetteur 30 de courants porteurs hautes fréquences PLC.

Le bloc impédance de terminaison 32, comporte successivement en partant de la ligne pilote 8, un condensateur 36 calculé pour ne pas dégrader de façon sensible les caractéristiques électriques du signal PWM, notamment les temps de montée et de descente du signal carré ainsi que le rapport cyclique, de manière à rester dans la norme ISO/IEC 61851-1, puis une résistance 38 reliée à la terre dont la valeur est proche de l'impédance caractéristique de la ligne.

En variante, on peut utiliser tout autre circuit électronique comportant une impédance équivalente proche.

La figure 2 montre sur une échelle logarithmique des fréquences allant de 1 à 100 MHz, la réponse des courants porteurs hautes fréquences PLC transmis par la ligne pilote 8, pour le système de liaison présenté ci-dessus sans les impédances de terminaison 32, présentée par la courbe 40, et avec ces impédances de terminaison, présentée par la courbe 42.

On constate sur la courbe 40 que sans les impédances de terminaison 32, on obtient une atténuation comportant des pics importants, notamment un pic vers 20 MHz, alors que sur la courbe 42 avec ces impédances de terminaison on obtient une atténuation qui est très constante sur toute la gamme de fréquences.

Le schéma ainsi proposé, comportant seulement des composants analogiques, permet d'injecter puis de séparer le signal PWM des courants porteurs hautes fréquences PLC de façon simple et suffisamment précise. En particulier, ce schéma est compatible avec les impédances d'entrée et de sortie des puces électroniques habituellement utilisées pour gérer le protocole des courants porteurs.

D'une manière générale, on peut appliquer ce schéma à de nombreuses applications, pour transmettre des informations sur une ligne pilote 8 comportant un signal basse fréquence, avec une ou plusieurs fréquences des courants porteurs hautes fréquences PLC, qui peuvent notamment être comprises entre 1 et 30 MHz.

## Revendications

1. - Système de communication par courants porteurs hautes fréquences PLC sur une ligne pilote (8), pour échanger des informations entre deux ensembles indépendants (2, 4), comportant à chaque extrémité un sous-ensemble émetteur (30) des courants porteurs hautes fréquences PLC, et une impédance de terminaison (32), cette ligne pilote transmettant de plus à un de ces ensembles qui est récepteur (4), un signal carré PWM basse fréquence qui donne une information notamment par la largeur de ses créneaux de tension, **caractérisé en ce que** chaque impédance de terminaison (32) est constituée d'un circuit relié à la terre, comportant un condensateur (36) et une résistance (38) disposés en série et **en ce que** le signal carré PWM est transmis dans l'ensemble récepteur (4) à un amplificateur (26) du type push-pull comportant une impédance d'entrée suffisamment élevée, et une impédance de sortie permettant de transmettre ce signal à un bloc d'analyse du signal PWM (28).

2. Système de communication par courants porteurs selon la revendication 1, **caractérisé en ce que** la résistance (38) de l'impédance de terminaison (32), a une valeur proche de l'impédance caractéristique de la ligne pilote (8).

3. Système de communication par courants porteurs selon la revendication 1 ou 2, **caractérisé en ce que** le bloc d'analyse du signal carré PWM (28) comporte en entrée un filtre passe-bas, pour filtrer les courants porteurs hautes fréquences PLC.

4. Système de communication par courants porteurs selon l'une quelconque des revendications précédentes, **caractérisé en ce que** chaque ensemble (2, 4) comporte à l'extrémité de la ligne pilote (8), un bloc émetteur (30) de courants porteurs hautes fréquences PLC, qui est relié à cette ligne par un condensateur (34).

5. Système de communication par courants porteurs selon l'une quelconque des revendications précédentes, **caractérisé en ce que** les courants porteurs hautes fréquences PLC, comportent une ou plusieurs fréquences comprises sensiblement entre 1 et 30 MHz.

6. Système de communication par courants porteurs selon l'une quelconque des revendications précédentes, **caractérisé en ce qu'**il est prévu pour transmettre des informations entre une borne de recharge de batteries d'un véhicule automobile électrique ou hybride, et ce véhicule.

7. Borne de recharge de batteries d'un véhicule électrique ou hybride, **caractérisée en ce qu'**elle met en oeuvre un système de communication selon l'une quelconque des revendications précédentes.

8. Véhicule électrique ou hybride comportant des batteries rechargeables par une borne de recharge (2), **caractérisé en ce qu'**il met en oeuvre un système de communication selon l'une quelconque des revendications 1 à 6.

## Patentansprüche

1. System zur Kommunikation mittels hochfrequenter PLC-Trägerströme über eine Steuerleitung (8) zum Austausch von Informationen zwischen zwei unabhängigen Baugruppen (2, 4), umfassend an jedem Ende eine Senderbaugruppe (30) für hochfrequente PLC-Trägerströme und eine Abschlussimpedanz (32), wobei diese Steuerleitung des Weiteren an eine dieser Baugruppen, die ein Empfänger (4) ist, ein niederfrequentes PWM-Rechtecksignal überträgt, das insbesondere durch die Breite seiner Spannungsnischen Informationen liefert, **dadurch gekennzeichnet, dass** jede Abschlussimpedanz (32) aus einer geerdeten Schaltung mit einem Kondensator (36) und einem in Reihe angeordneten Widerstand (38) besteht und dass das PWM-Rechtecksignal in der Empfängerbaugruppe (4) zu einem Gegentaktverstärker (26) mit einer ausreichend hohen Eingangsimpedanz und einer Ausgangsimpedanz, die die Übertragung dieses Signals zu einem Analyseblock des PWM-Signals (28) erlaubt, übertragen wird.

2. System zur Kommunikation mittels Trägerströmen nach Anspruch 1, **dadurch gekennzeichnet, dass** der Widerstand (38) der Abschlussimpedanz (32) einen Wert nahe der charakteristischen Impedanz der Steuerleitung (8) aufweist.

3. System zur Kommunikation mittels Trägerströmen nach Anspruch 1 oder 2, **dadurch gekennzeichnet, dass** der Analyseblock für das PWM-Rechtecksignal (28) am Eingang ein Tiefpassfilter zur Filterung der hochfrequenten PLC-Trägerströme aufweist.

4. System zur Kommunikation mittels Trägerströmen nach einem der vorstehenden Ansprüche, **dadurch gekennzeichnet, dass** jede Baugruppe (2, 4) am Ende der Steuerleitung (8) einen Sendeblock (30) für hochfrequente PLC-Trägerströme umfasst, der durch einen Kondensator (34) mit dieser Leitung verbunden ist.

5. System zur Kommunikation mittels Trägerströmen nach einem der vorstehenden Ansprüche, **dadurch gekennzeichnet, dass** die hochfrequenten PLC-Trägerströme eine oder mehrere Frequenzen zwischen im Wesentlichen 1 und 30 MHz umfassen.

6. System zur Kommunikation mittels Trägerströmen nach einem der vorstehenden Ansprüche, **dadurch gekennzeichnet, dass** es zur Übertragung von Informationen zwischen einer Batterieladestation für ein Elektro- oder Hybridfahrzeug und diesem Fahrzeug bestimmt ist.

7. Batterieladestation für ein Elektro- oder Hybridfahrzeug, **dadurch gekennzeichnet, dass** sie ein Kommunikationssystem nach einem der vorstehenden Ansprüche verwendet.

8. Elektro- oder Hybridfahrzeug umfassend durch eine Ladestation (2) aufladbare Batterien, **dadurch gekennzeichnet, dass** es ein Kommunikationssystem nach einem der Ansprüche 1 bis 6 verwendet.

## Claims

1. High frequency power line communication (PLC) system on a pilot line (8), for information exchange between two stand-alone assemblies (2, 4) comprising at each end a transmitting subassembly (30) for high frequency PLC and a termination impedance (32), the said pilot line transmitting to one of the assemblies that is a receiver (4) a low frequency PWM square wave signal that provides information, particularly by the width of its voltage windows, and **characterised by** the fact that each of the termination impedances (32) is made up of a grounded circuit comprising a condenser (36) and a resistor (38) arranged in a serial manner, and by the fact that the PWM square wave signal is transmitted into the receiver assembly (4) up to a push-pull amplifier (26) comprising a substantially high input impedance and an output impedance that allows for this wave to be transmitted to a PWM wave signal analysis unit (28).

2. Power line communication system according to Claim 1, **characterised by** the fact that the resistor (38) of the termination impedance (32) has a value similar to the standard impedance of the pilot line (8).

3. Power line communication system according to Claim 1 or 2, **characterised by** the fact that the PWM square wave signal analysis unit (28) has a low-pass filter at its input, which filters high frequency PLC.

4. Power line communication system according to any of the previous claims, **characterised by** the fact that each assembly (2, 4) comprises at the end of its pilot line (8) a transmitter unit (30) for high frequency PLC, which unit is connected to the said line by a condenser (34).

5. Power line communication system according to any of the previous claims, **characterised by** the fact that the high frequency PLC comprise one or several frequencies ranging substantially between 1 and 30 MHz

6. Power line communication systems according to any of the previous claims, **characterised by** the fact that it is designed to transmit information between a battery charging terminal/station of an electric or hybrid motor vehicle and the said vehicle.

7. Battery charging terminal/station of an electric or hybrid motor vehicle, **characterised by** the fact that it uses a communications system, according to any of the previous claims.

8. Electric or hybrid motor vehicle comprising batteries rechargeable by a charging terminal/station (2), **characterised by** the fact that it uses a communication system, according to any of Claims 1 to 6.
